# EUROPÄISCHE PATENTSCHRIFT

(11) **EP 1 761 982 B1**
(45) Veröffentlichungstag und Bekanntmachung des Hinweises auf die Patenterteilung: **07.11.2007**
(21) Anmeldenummer: 05751716.1
(22) Anmeldetag: 23.05.2005
(51) Int. Cl.: H02G 3/04, H02G 11/00

(54) **VORRICHTUNG MIT ZWEI RELATIV ZUEINANDER BEWEGLICHEN TEILEN SOWIE SCHLEPPKETTENANORDNUNG**
DEVICE COMPRISING TWO PARTS RELATIVELY MOVABLE WITH RESPECT TO EACH OTHER AS WELL AS GUIDE CHAIN ASSEMBLY
DISPOSITIF À DEUX PARTIES MOBILES L'UNE PAR RAPPORT À L'AUTRE AINSI QU'ARRANGEMENT DE CHAÎNE DE GUIDAGE

(30) Priorität: 24.05.2004 DE 102004025371
(43) Veröffentlichungstag der Anmeldung: 14.03.2007
(73) Patentinhaber: LEONI Bordnetz-Systeme GmbH & Co KG, 90402 Nürnberg (DE)
(72) Erfinder: FRANK, Tino, 97359 Schwarzach am Main (DE)
(74) Vertreter: Tergau & Pohl Patentanwälte
(86) Internationale Anmeldenummer: PCT/EP2005/005565
(87) Internationale Veröffentlichungsnummer: WO 2005/117222

(56) Entgegenhaltungen:
- WO-A-03/044903
- DE-A1- 3 100 944
- DE-U1- 8 531 182
- FR-A- 1 290 933
- US-A- 4 203 004
- PATENT ABSTRACTS OF JAPAN Bd. 2003, Nr. 12, 5. Dezember 2003 (2003-12-05) & JP 2003 264026 A (HARMONET KK), 19. September 2003 (2003-09-19)

## Beschreibung

Die Erfindung betrifft eine Vorrichtung mit zwei relativ zueinander beweglichen Teilen, insbesondere Kraftfahrzeugkarosserieteile, die über eine Versorgungsleitung miteinander verbunden sind, wobei die Versorgungsleitung in einer nach Art einer Schleppkette ausgebildeten biegeflexiblen Kabelführung derart geführt ist, dass bei einer Relativbewegung der beiden Teile ein Längenausgleich für die Versorgungsleitung durch die biegeflexible Kabelführung erfolgt, sowie eine Schleppkettenanordnung für eine derartige Vorrichtung.

Die Kabelführung dient zum geschützten Führen der Versorgungsleitung zwischen den zwei relativ zueinander beweglichen (Maschinen-) Teilen, die über die Versorgungsleitung insbesondere zur Energieversorgung aneinander angeschlossen sind. Die Kabelführung umgibt hierbei die Versorgungsleitung und schützt sie dadurch. Gleichzeitig wird durch die kettenartige Ausgestaltung bei der Relativbewegung zwischen den beiden Teilen ein Längenausgleich geschaffen, indem die beiden Endstücke der Kabelführung übereinanderliegend gegeneinander verschoben werden.

Herkömmliche Schlepp- oder Energieführungsketten sind gebildet aus einer Vielzahl von einzelnen miteinander verbundenen gleichartigen Kettengliedern, die zwischen sich einen Kabelkanal einschließen, durch den die Versorgungsleitung lose geführt ist. Aufgrund der Ausgestaltung als Kette ist eine Biegerichtung für die Versorgungsleitung festgelegt, die definiert ist durch die Orientierung der Drehachsen, um die die einzelnen Kettenglieder gegeneinander verdrehbar sind. Zur Ausbildung der Schleppkette müssen die einzelnen Kettenglieder aneinander montiert werden. Oftmals sind am Ende der Schleppkette Anschlussteile oder -elemente vorgesehen, mit denen die Schleppkette beispielsweise an einer Kraftfahrzeugkarosserie befestigt ist. Diese End- oder Anschlusselemente sind daher als Sonderelemente ausgebildet.

Die Versorgungsleitung ist insbesondere ein elektrisches Kabel. Alternativ hierzu bildet sie ein Kabel- oder Schlauchpaket mit mehreren Einzelleitungen, bei dem üblicherweise neben elektrischen Leitungen auch hydraulische, pneumatische oder Datenleitungen vorgesehen sind. Derartige Schlauchpakete werden insbesondere bei Industrierobotern eingesetzt. Da über die Versorgungsleitung einem Maschinenteil Energie zugeführt wird, kann diese auch als Energieleitung und die Leitungsführungseinrichtung als Energieleitungsführung bezeichnet werden.

In der DE 201 13 742 U1, welche den nächstliegenden Stand der Technik darstellt, ist der Einsatz einer als Schleppkette ausgebildete Leitungsführungseinrichtung für einen Industrieroboter beschrieben. Ein weiteres Einsatzfeld der Leitungsführungseinrichtung ist insbesondere in der Automobilindustrie zu sehen. Dort insbesondere für eine Schiebetürverkabelung, eine Sitzverkabelung, Cabrioverdeckverkabelungen sowie Heckklappen- oder Kofferraumdeckelverkabelungen.

Zum Schutz vor Biegebeanspruchungen von Leitungen sind beispielsweise bei spritzgegossenen Steckern oder bei Bowdenzügen Schutzhüllen der Schutzrohre vorgesehen, die die Leitung umgeben und eine definierte Biegung der Leitung erlauben. So ist beispielsweise aus der DE 85 31 182 U1 eine in etwa rohrförmige Umhüllung für einen Bowdenzug zu entnehmen, wobei die Umhüllung mehrere Quer-Ausnehmungen aufweist, so dass eine Biegung ermöglicht ist. Ähnliche Schutzhüllen sind aus der FR 1 290 933 A sowie aus der DE 31 00 944 A1 zu entnehmen. Eine flexible Schutzumhüllung als Teil eines spritzgegossenenen Steckers ist beispielsweise aus der JP 2003 264026 A zu entnehmen.

Der Erfindung liegt die Aufgabe zugrunde, eine verbesserte Leitungsführung zwischen zwei relativ zueinander beweglichen Teilen zu ermöglichen.

Die Aufgabe wird gemäß der Erfindung gelöst durch eine Vorrichtung mit den Merkmalen des Anspruchs 1. Die Vorrichtung umfasst eine nach Art einer Schleppkette ausgebildete Leitungsführungseinrichtung, bei der eine Versorgungsleitung, insbesondere ein elektrisches Kabel, in einer biegeflexiblen Kabelführung geführt ist. Die Kabelführung ist hierbei ein einstückiges Bauteil, welches mehrere um die Versorgungsleitung umlaufende und voneinander beabstandete Segmente aufweist, die über Versteifungsstege miteinander verbunden sind. Die Versteifungsstege sind hierbei zur Ausbildung zumindest eines Versteifungsbandes entlang einer Linie aneinandergereiht, so dass eine Biegerichtung für die Kabelführung definiert ist. In Biegerichtung weist die Kabelführung eine hohe Biegeflexibilität bzw. eine geringe Biegesteifigkeit auf.

Die Kabelführung ist hierbei insbesondere ein gegossenes, ein gespritztes oder ein geschäumtes Bauteil. Durch die Ausgestaltung als einstückige Baueinheit entfällt in vorteilhafter Weise die aufwändige Montage der Einzelbauteile. Weiterhin sind hierdurch vielfältige Gestaltungsmöglichkeiten gegeben, da die Leitungsführungseinrichtung im Unterschied zu bekannten Schleppketten nicht aus einzelnen gleichartigen Kettengliedern besteht. Vielmehr besteht die Möglichkeit, der Kabelführung über ihre Länge unterschiedliche Eigenschaften zuzuweisen.

Diese Vorteile werden erzielt, ohne dass die Vorteile einer herkömmlichen Schleppkette, nämlich die geschützte Führung der Versorgungsleitung und die Festlegung einer Biegerichtung, beeinträchtigt werden. Um diese herkömmlichen, schleppkettentypische Vorteile zu erreichen weist die Kabelführung die insbesondere als Ringsegmente ausgebildeten Segmente auf, die lediglich über die Versteifungsstege miteinander verbunden sind. Durch die gegenseitige Beabstandung der Segmente wird die Biegung der Kabelführung ermöglicht. Die einzelnen Segmente können hierbei gegebenenfalls - neben den Versteifungsstegen - über dünne, flexible Materialbrücken miteinander verbunden sein. Diese Materialbrücken sind beispielsweise Filmhäute, die sich beim Herstellungsprozess ausbilden.

Für eine möglichst einfache und kostengünstige Herstellung wird vorzugsweise derart vorgegangen, dass die Versorgungsleitung in eine zur Kabelführung komplementär ausgebildeten Werkzeugform eingelegt und anschließend zur Ausbildung der einstückigen Kabelführung mit einem geeigneten Material umgossen, umspritzt oder umschäumt wird. Als Materialien bieten sich hier die in der Kunststoffindustrie gängigen Spritz-, Gieß- oder Schäummaterialien an. Je nach den gewünschten Eigenschaften wird durch entsprechende Materialwahl oder Wahl der entsprechenden Prozessparameter bei der Herstellung die Härte, Elastizität und Widerstandsfähigkeit gegen äußere Einflüsse geeignet eingestellt.

Gemäß einer bevorzugten Weiterbildung ist das Versteifungsband in Längsrichtung der Kabelführung verdreht, so dass über die Länge der Kabelführung unterschiedliche Biegerichtungen definiert sind. Das Versteifungsband ist dabei nach Art eines Teils einer Spiralwindung um die Kabelführung geführt. Hierdurch ist über die Länge der Kabelführung eine Biegung um unterschiedlich orientierte Biegeachsen ermöglicht. Die Leitungsführungseinrichtung lässt sich daher insbesondere auch dort einsetzen, wo ein komplexer dreidimensionaler Leitungsverlauf bzw. Bewegungsablauf erforderlich ist.

Zweckdienlicherweise sind bei der Leitungsführungseinrichtung genau zwei gegenüberliegende Versteifungsbänder vorgesehen. Diese gegenüberliegenden Versteifungsbänder entsprechen daher den beiden durch die Seitenteile der einzelnen Kettenglieder definierten Seitenbänder einer Kette. Durch diese Ausgestaltung ist eine hohe Biegesteifigkeit in einer Richtung erzielt und der diesbezügliche Biegefreiheitsgrad ist vollständig aufgehoben.

Vorzugsweise ist ein minimaler Biegeradius eingestellt, wobei hierzu der Abstand zwischen den Segmenten und/oder die Formgebung der Segmente entsprechend gewählt ist. Die Segmente können hierbei im Hinblick auf ihre Höhe, Breite/Stärke, oder einer schrägen Ausbildung usw. variabel eingestellt werden, um einen gewünschten minimalen Biegeradius zu definieren. Im gebogenen Zustand bei Erreichen des minimalen Biegeradius berühren sich benachbarte Segmente und stützen sich aneinander ab, so dass ein weiteres Biegen nicht möglich ist.

Bevorzugt sind die Segmente und/oder die Versteifungsstege über die Länge der Kabelführung unterschiedlich ausgebildet, so dass sich unterschiedliche minimale Biegeradien einstellen. Durch die Einstellung von festen minimalen Biegeradien wird die Versorgungsleitung vor einer unzulässigen Überdehnung geschützt.

Gemäß einer bevorzugten Weiterbildung weist die als einstückige Baueinheit ausgebildete Kabelführung zumindest an einem Ende ein Anschlusselement auf. Dieses Anschlusselement dient insbesondere zur Befestigung der Leitungsführungseinrichtung beispielsweise an einem Maschinenteil oder an einem Karosserieteil. Das Anschlusselement ist also insbesondere auch als Befestigungselement ausgebildet oder weist zumindest integrierte Befestigungselemente, wie beispielsweise Schraublöcher oder Rasthaken/Rastzapfen auf.

Um eine ausreichende Festigkeit im Anschlussbereich zu ermöglichen, ist gemäß einer zweckdienlichen Weiterbildung vorgesehen, dass das Anschlusselement ein insbesondere einliegendes Versteifungselement, beispielsweise eine stabile Metall- oder Kunststoffplatte aufweist, die zudem auch eines oder mehrere Befestigungselemente tragen kann.

Zweckdienlicherweise ist das Anschlusselement weiterhin derart ausgebildet, dass es die Versorgungsleitung dicht umschließt. Insbesondere wird hierdurch eine Längswasserdichtigkeit erzielt. Über das Anschlusselement wird insbesondere ein Übergang zwischen einem Nass- zu einem Trockenbereich bereitgestellt und dadurch der Trockenbereich gegenüber einem Eindringen von Feuchtigkeit geschützt.

Beim bevorzugten Herstellungsprozess des Umgießens, Umspritzens oder Umschäumens ist nicht zwingend erforderlich, dass die Kabelführung mit der Versorgungsleitung stoff- oder kraftschlüssig verbunden wird. Alternativ besteht die Möglichkeit, dass durch die Wahl geeigneter Herstellungsparameter die Versorgungsleitung mehr oder weniger beweglich in der Kabelführung angeordnet ist, so dass zumindest in gewissen Teilbereichen eine Relativverschiebung zwischen der Kabelführung und der Versorgungsleitung ermöglicht ist. Vorzugsweise ist jedoch zumindest im Bereich des Anschlusselements eine feste Verbindung zwischen der Kabelführung und der Versorgungsleitung vorgesehen.

Gemäß einer zweckdienlichen Weiterbildung sind an der Kabelführung Führungselemente vorgesehen, die zur Führung der Kabelführung beispielsweise an einer Schiene ausgebildet sind. Durch diese Maßnahme besteht die Möglichkeit, die Kabelführung in die Schiene zumindest mit Teilbereichen einzuhängen und in der Schiene auch hängend zu führen.

Um eine hohe Zugfestigkeit der Kabelführung zu erzielen, ist zweckdienlicherweise vorgesehen, dass in die Kabelführung, insbesondere in das Versteifungsband, ein zugfestes Element, integriert ist. Dies ist beispielsweise ein Faden oder ein Strang mit hoher Zugfestigkeit.

Die Aufgabe wird weiterhin gelöst durch eine Schleppkettenanordnung mit den Merkmalen des Anspruchs 13.

Ausführungsbeispiele der Erfindung werden im Folgenden anhand der Zeichnung näher erläutert. Es zeigen jeweils in schematischen und vereinfachten Darstellungen:
- Fig. 1: eine Leitungsführungseinrichtung mit einer einstückigen, ein Anschlusselement aufweisenden Kabelführung in gestreckter Ausrichtung,
- Fig. 2: eine Leitungsführungseinrichtung ohne Anschlusselement in einer gebogenen Ausrichtung,
- Fig. 3: eine Leitungsführungseinrichtung mit integriertem Anschlusselement und einem über die Länge der Kabelführung verdrehten Versteifungsband,
- Fig. 4a-4c: Leitungsführungseinrichtungen mit über die Länge der Kabelführung verdrehten Leitungsbändern im gebogenen Zustand, wobei die Kabelführung um unterschiedliche Biegeachsen gebogen ist,
- Fig. 5: eine Leitungsführungseinrichtung, bei der einzelne Segmente der Kabelführung unterschiedlich weit voneinander beabstandet sind,
- Fig. 6: eine Leitungsführungseinrichtung, bei der die Segmente im Hinblick auf ihre Breite, Höhe und Form unterschiedlich ausgebildet sind und
- Fig. 7: eine Leitungsführungseinrichtung mit an die Kabelführung angeformten Führungselementen.

In den Figuren sind hierbei gleich wirkende Teile mit den gleichen Bezugszeichen versehen.

Eine Leitungsführungseinrichtung 2 gemäß den Figuren ist jeweils gebildet aus einer Versorgungsleitung 4 und einer Kabelführung 6. Die Versorgungsleitung 4 weist gemäß den Ausführungsbeispielen vier Einzelleitungen 8 sowie eine diese umgebende Ummantelung 9 auf. Die Einzelleitungen 8 sind insbesondere elektrische Kabel. Die Ummantelung 9 ist beispielsweise eine Mantelleitung oder eine Bandierung. Die Kabelführung 6 weist in allen Ausführungsbeispielen eine Vielzahl von einzelnen insbesondere aus Vollmaterial bestehenden Ringsegmenten 10 auf, die die Versorgungsleitung 4 vollumfänglich umschließen. Sie sind in Längsrichtung 12 der Kabelführung 6 zueinander beabstandet aneinandergereiht. Die Ringsegmente 10 weisen dabei jeweils eine diskusartige Außengeometrie 4 auf. Die Ringsegmente 10 verjüngen sich also zu ihrer umlaufenden Stirnseite 10A hin. Beidseitig der Stirnseite 10A schließen sich jeweils Schrägflächen 10B an.

Benachbarte Ringsegmente 10 sind jeweils vorzugsweise über genau zwei Versteifungsstege 14 miteinander verbunden. Die Versteifungsstege 14 sind hierbei um 180° versetzt und damit zueinander gegenüberliegend angeordnet. Die in Längsrichtung 12 aufeinander folgenden Versteifungsstege 14 sind hierbei entlang einer Linie ausgerichtet, so dass über die Länge der Kabelführung 6 insgesamt ein Versteifungsband 16 ausgebildet ist.

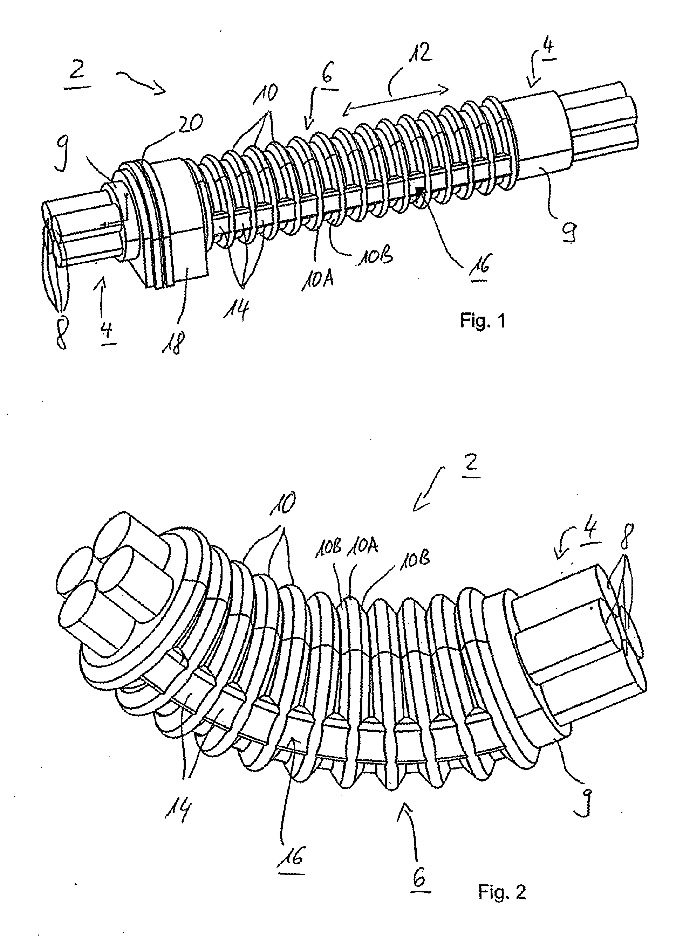

Durch die gegenüberliegende Anordnung der Versteifungsbänder 16 ist der Biegefreiheitsgrad eingeschränkt, da im Bereich der Versteifungsbänder 16 die Kabelführung 6 nicht gestaucht und nicht gedehnt werden kann. Ein Dehnen bzw. Stauchen der Kabelführung 6 ist nur in den Bereichen möglich, in denen keine Versteifungsstege 14 angeordnet sind. Hierdurch wird die Biegerichtung der Leitungsführungseinrichtung 2 festgelegt. Das Dehnen bzw. Stauchen wird durch die voneinander beabstandeten Ringsegmente 10 soweit ermöglicht, bis diese auf der innenliegenden Stauchungsseite aneinander stoßen (vgl. insbesondere Fig. 2). Durch diese Begrenzung ist ein minimaler Biegeradius festgelegt.

Um die Biegung zu ermöglichen, sind die einzelnen Ringsegmente 10 vorzugsweise ausschließlich über die Versteifungsstege 14 miteinander verbunden. Alternativ hierzu sind sie zusätzlich zu den Versteifungsstegen 14 mit einer dünnen und elastischen Materialbrücke, beispielsweise eine Filmhaut, miteinander verbunden.

Zum Herstellen der Leitungsführungseinrichtung 2 wird vorzugsweise folgendermaßen vorgegangen: Zunächst wird die ummantelte Versorgungsleitung 4, also die von der Ummantelung 9 umhüllten Einzelleitungen 8, in eine geeignete Werkzeugform eingelegt, die die Negativ-Form für die Kabelführung 6 darstellt. Anschließend wird die Werkzeugform mit einem geeigneten Kunststoff-Material zur Ausbildung der Kabelführung 6 gefüllt, so dass insgesamt die Versorgungsleitung 4 mit dem Material - je nach gewählter Herstellungsmethode - umgossen, umspritzt oder vorzugsweise umschäumt wird. Aufgrund der Ummantelung ist ein Eindringen des Kunststoff-Materials in die Zwischenräume zwischen die Einzelleitungen verhindert. Durch diesen Herstellungsprozess ist insgesamt eine einstückige Kabelführung 6 ausgebildet. Es bedarf keiner weiteren Nachbearbeitungs- oder Montageschritte. In einem einstufigen Vorgang wird also die nach Art einer Schleppkettenanordnung ausgebildeten Leitungsführungseinrichtung 2 ausgebildet. Alternativ hierzu ist es prinzipiell auch möglich, zunächst die Kabelführung 6 herzustellen und erst anschließend die Versorgungsleitung 4 durch die Kabelführung 6 zu führen. Hierbei ist letztere beispielsweise aufklappbar ausgestaltet, so dass die Versorgungsleitung 4 seitlich eingelegt werden kann. Die erstgenannte Variante mit dem Umspritzen/Umgießen /Umschäumen der Versorgungsleitung 4 ist die bevorzugte Variante, da hier der Herstellungsaufwand gering ist. Insbesondere bietet sich dieses Herstellungsverfahren an, um vorgefertigte Montageeinheiten zur Verfügung zu stellen.

Mit der Herstellungsmethode insbesondere des Umschäumens der Versorgungsleitung 4 zur Ausbildung der einstückigen Kabelführung 6 ist eine sehr hohe Flexibilität im Hinblick auf die Ausgestaltungsmöglichkeiten der Kabelführung 6 gegeben. Insbesondere lassen sich vielfältige Funktionen bereits beim Herstellen durch eine geeignete Formgebung in die Kabelführung 6 integrieren. Von besonderem Vorteil ist hierbei, dass über die Länge der Kabelführung die Formgebung variiert werden kann.

So weist die Kabelführung 6 in einigen Ausführungsbeispielen ein als integral mit den Ringsegmenten 10 verbundenes Anschlusselement 18 auf, wie dies in den Fig. 1, 3, 5, 6 und 7 dargestellt ist. Das Anschlusselement 18 ist hierbei als multifunktionale Anschlusseinheit ausgebildet, welche zum einen zum Befestigen an einem Maschinen- oder Karosseriebauteil vorgesehen ist. Das Anschlusselement 18 dient zum anderen zugleich auch zum gegenseitigen Abdichten zweier Räumen, die durch das Anschlusselement 18 getrennt sind. Um diese Abdichtungs- sowie auch Befestigungsfunktion bereit zu stellen, weist das Anschlusselement 18 eine umlaufende Nut 20 auf, die als Dicht- und Befestigungsnut ausgebildet ist. In diese greift in der montierten Endstellung eine entsprechende Feder des Maschinenteils ein. Gleichzeitig sind die Einzelleitungen 8 im Bereich des Anschlusselements 18 in der Guß-, Spritz- oder Schaummasse eingebettet und damit abgedichtet, so dass auch eine Längswasserdichtigkeit entlang der Einzelleitungen 8 gewährleistet ist. Die Einzelleitungen 8 sind hierbei im Anschlusselement 18 vorzugsweise ortsfest gehalten.

Am zweiten, dem Anschlusselement 18 gegenüberliegenden Ende der Kabelführung 6 ist bevorzugt ein weiteres hier nicht näher dargestelltes Anschlusselement vorgesehen. Dieses kann identisch zum Anschlusselement 18 ausgebildet sein.

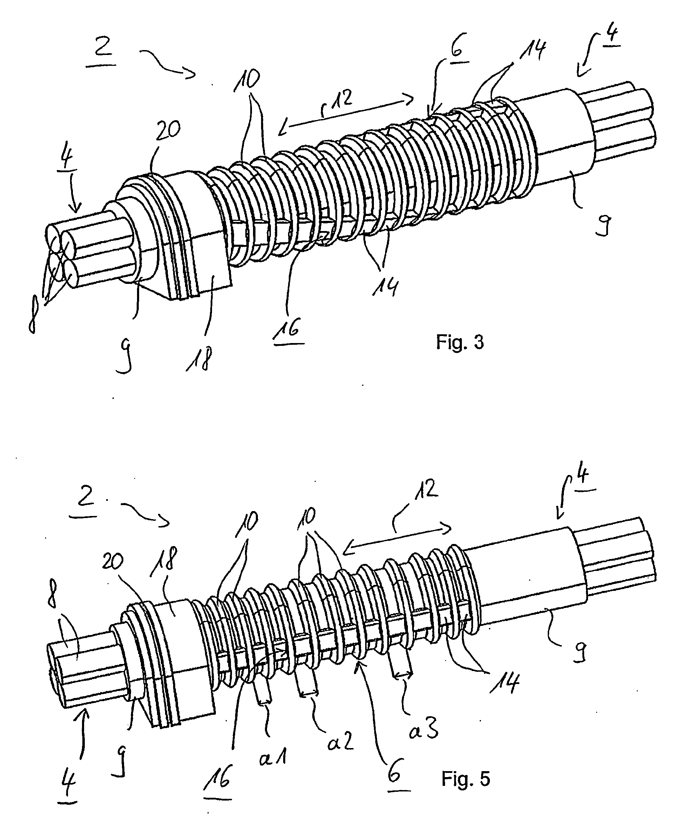

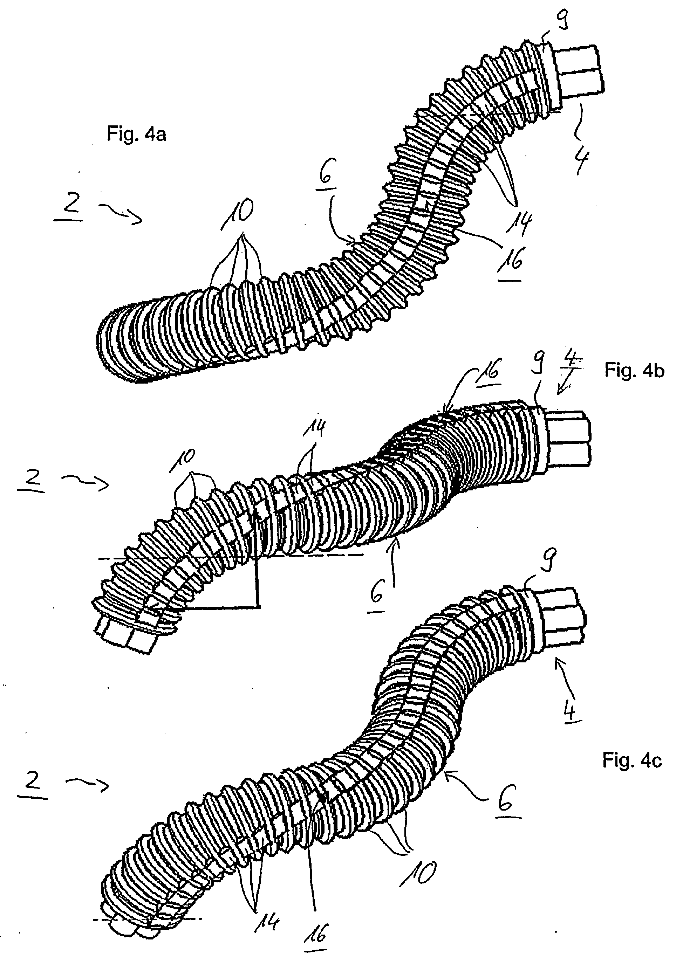

In den Ausführungsbeispielen gemäß den Fig. 3 und 4a - 4c sind die Versteifungsbänder 16 nach Art von Teilspiralen in Längsrichtung 12 um den Umfang der Kabelführung 6 gedreht. Das erste und das letzte Ringsegment 10, die jeweils dem Anschlusselement 18 bzw. dem weiteren Anschlusselement 22 benachbart sind, sind hierbei um einen Drehwinkel gegeneinander versetzt, der in den Ausführungsbeispielen der Fig. 3 und 4a - 4c etwa 90° beträgt. Da durch die Versteifungsbänder 16 die Biegerichtung festgelegt ist, wird durch diese Maßnahme über die Länge der Kabelführung 6 die Biegerichtung verändert. Im Falle eines Drehwinkels von 90° wird daher die Biegerichtung, in der die Leitungsführungseinrichtung 2 biegbar ist, um 90° verdreht. Insgesamt lassen sich dadurch komplexe dreidimensionale Führungen verwirklichen, wie anhand der Darstellungen gemäß den Fig. 4a, 4b, 4c zu entnehmen ist.

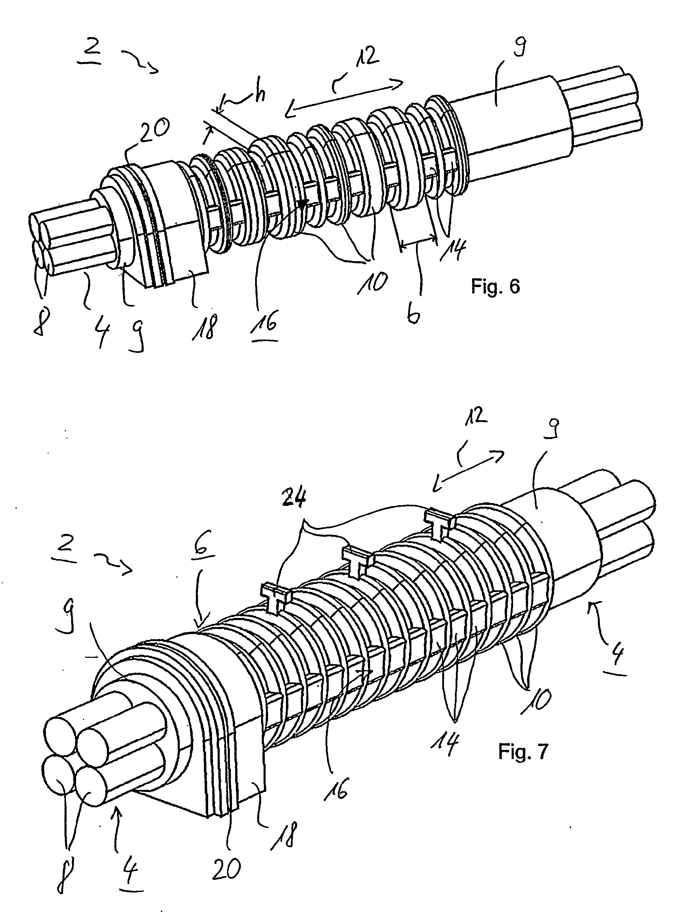

Gemäß den Ausführungsbeispielen der Fig. 5 und 6 weisen benachbarte Ringsegmente 10 unterschiedliche Abstände a1, a2, a3 auf bzw. sind die einzelnen Ringsegmente 10 unterschiedlich ausgebildet. Durch die Variationen im Hinblick auf die Abstände und/oder die Formgebung lassen sich insbesondere über die Länge der Kabelführung 6 variable Eigenschaften einstellen. Insbesondere lässt sich durch diese Maßnahmen der minimale Biegeradius einstellen. Dieser ist im Wesentlichen dadurch bestimmt, bei welchem Biegeradius benachbarte Ringsegmente 10 sich aneinander abstützen. Hierauf wird Einfluss genommen durch die Wahl der unterschiedlichen Abstände a1, a2, a3 und/oder der Wahl von unterschiedlichen Höhen h der einzelnen Ringsegmente 10 und/oder der Wahl von unterschiedlichen Breiten b der Ringsegmente 10 und/oder der Wahl von unterschiedlichen Formen der Ringsegmente 10. Im Hinblick auf die Form besteht hierbei insbesondere eine Variationsmöglichkeit bezüglich des Winkels, unter dem die Schrägflächen 10B angeordnet sind.

Im Ausführungsbeispiel der Fig. 7 sind an der Außenseite von mehreren Ringelementen 10 Führungselemente 24 vorgesehen. Diese sind hier im Querschnitt gesehen in etwa T-förmig ausgebildet und dienen zum Einhaken in eine Führungsschiene, die beispielsweise durch eine geschlitzte U-Schiene gebildet ist. Durch die Führungselemente 24 besteht daher die Möglichkeit, die Leitungsführungseinrichtung 2 insgesamt oder in Teilbereichen entlang einer Führungsschiene auch hängend zu verschieben. Die Führungselemente 24 sind im Ausführungsbeispiel um 90° drehversetzt zu den Leitungsbändern 16 angeordnet.

In einer bevorzugten, hier nicht näher dargestellten Weiterbildung, ist zur Erhöhung der Zugfestigkeit der Kabelführung 6 weiterhin ein zugfestes Element vorgesehen, welches in der Kabelführung 6 integriert ist. Insbesondere ist dieses zugfeste Element durch einen oder mehrere Fäden oder Stränge hoher Zugfestigkeit gebildet, die zweckdienlicherweise in die Versteifungsbänder 16 integriert sind.

### Bezugszeichenliste

- 2: Leitungsführungseinrichtung
- 4: Versorgungsleitung
- 6: Kabelführung
- 8: Einzelleitung
- 9: Ummantelung
- 10: Ringsegment
- 10A: Stirnseite
- 10B: Schrägfläche
- 12: Längsrichtung
- 14: Versteifungssteg
- 16: Versteifungsband
- 18: Anschlusselement
- 20: Nut
- 24: Führungselement

## Patentansprüche

1. Vorrichtung mit zwei relativ zueinander beweglichen Teilen, insbesondere Kraftfahrzeugkarosserieteile, die über eine Versorgungsleitung (4) miteinander verbunden sind, wobei die Versorgungsleitung (4) in einer nach Art einer Schleppkette ausgebildeten biegeflexiblen Kabelführung (6) derart geführt ist, dass bei einer Relativbewegung der beiden Teile ein Längenausgleich für die Versorgungsleitung (4) durch die biegeflexible Kabelführung (6) erfolgt,
**dadurch gekennzeichnet,**
**dass** die Kabelführung (6) ein einstückiges Bauteil ist, das mehrere um die Versorgungsleitung (4) umlaufende Segmente (10) aufweist, die über Versteifungsstege (14) miteinander verbunden sind, welche zur Ausbildung zumindest eines Versteifungsbandes (16) entlang einer Linie aneinandergereiht sind, so dass eine Biegerichtung für die Kabelführung (6) definiert ist.

2. Vorrichtung nach Anspruch 1,
**dadurch gekennzeichnet,**
**dass** über die Versorgungsleitung (4) eine der nachfolgenden Verkabelungen verwirklicht ist: Schiebetürverkabelung, Sitzverkabelung, Cabrioverdeckverkabelung, Heckklappenverkabelung, Kofferaumdeckelverkabelung.

3. Vorrichtung nach Anspruch 1 oder 2,
**dadurch gekennzeichnet,**
**dass** die Kabelführung (6) ein gegossenes, gespritztes oder geschäumtes Bauteil ist.

4. Vorrichtung nach einem der vorhergehenden Ansprüche,
**dadurch gekennzeichnet,**
**dass** die Versorgungsleitung (4) zur Ausbildung der Kabelführung (6) umgossen, umspritzt oder umschäumt ist.

5. Vorrichtung nach einem der vorhergehenden Ansprüche,
**dadurch gekennzeichnet,**
**dass** das Versteifungsband (16) in Längsrichtung (12) der Kabelführung (6) verdreht ist.

6. Vorrichtung nach einem der vorhergehenden Ansprüche,
**dadurch gekennzeichnet,**
**dass** genau zwei gegenüberliegende Versteifungsbänder (16) vorgesehen sind.

7. Vorrichtung nach einem der vorhergehenden Ansprüche,
**dadurch gekennzeichnet,**
**dass** ein minimaler Biegeradius durch die Wahl des Abstands. (a1,a2,a3) zwischen den Segmenten (10) und/oder durch die Formgebung der Segmente (10) eingestellt ist.

8. Vorrichtung nach Anspruch 7,
**dadurch gekennzeichnet,**
**dass** über die Länge der Kabelführung (6) unterschiedliche minimale Biegeradien vorgegeben sind.

9. Vorrichtung nach einem der vorhergehenden Ansprüche,
**dadurch gekennzeichnet,**
**dass** zumindest an einem Ende die als einstückige Kabelführung (6) ausgebildete Baueinheit ein Anschlusselement (18) aufweist.

10. Vorrichtung nach Anspruch 9.
**dadurch gekennzeichnet,**
**dass** das Anschlusselement (18) die Versorgungsleitung (4) dicht umschließt.

11. Vorrichtung nach einem der vorhergehenden Ansprüche,
**dadurch gekennzeichnet,**
**dass** an der Kabelführung (6) Führungselemente (24) zur Führung der Kabelführung (6) vorgesehen sind.

12. Vorrichtung nach einem der vorhergehenden Ansprüche,
**dadurch gekennzeichnet,**
**dass** in die Kabelführung (6), insbesondere in das Versteifungsband (16); ein zugfestes Element integriert ist.

13. Schleppkettenanordnung (2) für eine Vorrichtung nach einem der vorhergehenden Ansprüche mit einer in einer biegeflexiblen Kabelführung (6) geführten Versorgungsleitung (4),
**dadurch gekennzeichnet,**
**dass** die Kabelführung (6) ein einstückiges Bauteil ist, das mehrere um die Versorgungsleitung (4) umlaufende Segmente (10) aufweist, die über Versteifungsstege (14) miteinander verbunden sind, welche zur Ausbildung zumindest eines Versteifungsbandes (16) entlang einer Linie aneinandergereiht sind, so dass eine Biegerichtung für die Kabelführung (6) definiert ist.

14. Schleppkettenanordnung (2) nach Anspruch 13,
**dadurch gekennzeichnet,**
**dass** die Segmente als Ringsegmente (10) ausgebildet sind und die Versorgungsleitung (4) den durch die Ringsegmente (10) gebildeten zylindrischen Innenraum ausfüllt, und dass die Versorgungsleitung (4) zur Ausbildung der Kabelführung (6) umgossen, umspritzt oder umschäumt ist.

## Claims

1. Apparatus having two parts which can move in relation to one another, in particular motor vehicle body parts, which are connected to one another via a supply line (4), the supply line (4) being routed in a flexible cable guide (6) in the form of a drag chain such that, in the event of a relative movement between the two parts, a length compensation for the supply line (4) takes place owing to the flexible cable guide (6), **characterized in that** the cable guide (6) is an integral component, which has a plurality of segments (10), which surround the supply line (4) and are connected to one another via reinforcing webs (14), which are arranged next to one another in a row along a line so as to form at least one reinforcing strip (16), with the result that a bending direction for the cable guide (6) is defined.

2. Apparatus according to Claim 1, **characterized in that** the supply line (4) is used to implement one of the following wiring systems: sliding door wiring system, seat wiring system, convertible roof wiring system, tailgate wiring system, boat lid wiring system.

3. Apparatus according to Claim 1 or 2, **characterized in that** the cable guide (6) is a cast, injection-moulded or foamed component.

4. Apparatus according to one of the preceding claims, **characterized in that** the supply line (4) has material cast, injected or foamed around it so as to form the cable guide (6).

5. Apparatus according to one of the preceding claims, **characterized in that** the reinforcing strip (16) is twisted in the longitudinal direction (12) of the cable guide (6).

6. Apparatus according to one of the preceding claims, **characterized in that** precisely two opposite reinforcing strips (16) are provided.

7. Apparatus according to one of the preceding claims, **characterized in that** a minimum bending radius is set by the selection of the distance (a1, a2, a3) between the segments (10) and/or by the shaping of the segments (10).

8. Apparatus according to Claim 7, **characterized in that** minimum bending radii which are different over the length of the cable guide (6) are predetermined.

9. Apparatus according to one of the preceding claims, **characterized in that** the unit in the form of an integral cable guide (6) has a connection element (18) at least at one end.

10. Apparatus according to Claim 9, **characterized in that** the connection element (18) tightly surrounds the supply line (4).

11. Apparatus according to one of the preceding claims, **characterized in that** routing elements (24) for routing the cable guide (6) are provided on the cable guide (6).

12. Apparatus according to one of the preceding claims, **characterized in that** an element having a high tensile strength is integrated in the cable guide (6), in particular in the reinforcing strip (16).

13. Drag chain arrangement (2) for an apparatus according to one of the preceding claims, having a supply line (4) routed in a flexible cable guide (6), **characterized in that** the cable guide (6) is an integral component, which has a plurality of segments (10), which surround the supply line (4) and are connected to one another via reinforcing webs (14), which are arranged next to one another in a row along a line so as to form at least one reinforcing strip (16), with the result that a bending direction for the cable guide (6) is defined.

14. Drag chain arrangement (2) according to Claim 13, **characterized in that** the segments are in the form of ring segments (10), and the supply line (4) fills the cylindrical interior formed by the ring segments (10), and **in that** the supply line (4) has material cast, injected or foamed around it so as to form the cable guide (6).

## Revendications

1. Dispositif comprenant deux pièces mobiles l'une par rapport à l'autre, notamment des pièces de carrosserie de véhicule automobile, qui sont reliées l'une à l'autre par l'intermédiaire d'une conduite d'alimentation (4), la conduite d'alimentation (4) étant guidée dans un guide-câble (6) flexible réalisé à la manière d'une goulotte articulée de guidage, de façon telle que lors d'un mouvement relatif des deux pièces, il se produise une compensation de longueur pour la conduite d'alimentation (4) par le guide-câble (6) flexible,
**caractérisé en ce que** le guide-câble (6) est une pièce d'un seul tenant, qui comprend plusieurs segments (10) s'étendant autour de la conduite d'alimentation (4) et reliés mutuellement par des nervures de renfort (14) qui sont arrangées les unes à la suite des autres le long d'une ligne pour former au moins une bande de renfort (16) de manière à définir une direction de flexion pour le guide-câble (6).

2. Dispositif selon la revendication 1,
**caractérisé en ce que** la conduite d'alimentation (4) réalise l'un des câblage suivants : câblage de porte ou portière coulissante, câblage pour siège, câblage pour capote de cabriolet, câblage pour hayon arrière, câblage pour couvercle de coffre à bagages.

3. Dispositif selon la revendication 1 ou 2,
**caractérisé en ce que** le guide-câble (6) est une pièce obtenue par moulage, par injection ou par moussage.

4. Dispositif selon l'une des revendications précédentes,
**caractérisé en ce que** la conduite d'alimentation (4) est entourée par moulage, par injection ou par moussage pour la réalisation du guide-câble (6).

5. Dispositif selon l'une des revendications précédentes,
**caractérisé en ce que** la bande de renfort (16) présente une torsion dans la direction longitudinale (12) du guide-câble (6).

6. Dispositif selon l'une des revendications précédentes,
**caractérisé en ce que** sont prévues exactement deux bandes de renfort (16) opposées.

7. Dispositif selon l'une des revendications précédentes,
**caractérisé en ce qu'**un rayon de flexion minimal est réglé par le choix de la distance d'espacement (a1, a2, a3) entre les segments (10) et/ou par la forme donnée aux segments (10).

8. Dispositif selon la revendication 7,
**caractérisé en ce que** l'on prédéfinit différents rayons de flexion minimums par la longueur du guide-câble (6).

9. Dispositif selon l'une des revendications précédentes,
**caractérisé en ce que** le module de construction formé par le guide-câble (6) d'un seul tenant, présente à au moins l'une de ses extrémités, un élément de raccordement (18).

10. Dispositif selon la revendication 9,
**caractérisé en ce que** l'élément de raccordement (18) entoure de manière étroitement étanche la conduite d'alimentation (4).

11. Dispositif selon l'une des revendications précédentes,
**caractérisé en ce que** sur le guide-câble (6) sont prévus des éléments de guidage (24) pour le guidage du guide-câble (6).

12. Dispositif selon l'une des revendications précédentes,
**caractérisé en ce que** dans le guide-câble (6), notamment dans la bande de renfort (16), est intégré un élément résistant à la traction.

13. Agencement de goulotte articulée de guidage (2) pour un dispositif selon l'une des revendications précédentes, comprenant une conduite d'alimentation (4) guidée dans un guide-câble (6) flexible,
**caractérisé en ce que** le guide-câble (6) est une pièce d'un seul tenant, qui comprend plusieurs segments (10) s'étendant autour de la conduite d'alimentation (4) et reliés mutuellement par des nervures de renfort (14) qui sont arrangées les unes à la suite des autres le long d'une ligne pour former au moins une bande de renfort (16) de manière à définir une direction de flexion pour le guide-câble (6).

14. Agencement de goulotte articulée de guidage (2) selon la revendication 13,
**caractérisé en ce que** les segments sont réalisés sous forme de segments annulaires (10), et la conduite d'alimentation (4) remplit l'espace intérieur cylindrique formé par les segments annulaires (10), et **en ce que** la conduite d'alimentation (4) est entourée par moulage, par injection ou par moussage pour la réalisation du guide-câble (6).
